# EUROPÄISCHE PATENTANMELDUNG

(11) **EP 3 045 412 A1**
(43) Veröffentlichungstag der Anmeldung: **20.07.2016**
(21) Anmeldenummer: 15151359.5
(22) Anmeldetag: 16.01.2015
(51) Int. Cl.: B65G 47/68

(54) **Vorrichtung zum Vereinzeln von in einem automatisierten Lager einzulagernden Stückgütern**

(71) Anmelder: CareFusion Germany 326 GmbH, 53539 Kelberg (DE)
(72) Erfinder: Hellenbrand, Christoph, 56761 Kaifenheim (DE)
(74) Vertreter: Zenz Patentanwälte Partnerschaft mbB

(57) **Zusammenfassung**

Die vorliegende Erfindung betrifft eine Vorrichtung zum Vereinzeln von in einem automatisierten Lager einzulagernden Stückgütern. Bekannte Vorrichtungen zum Vereinzeln sind für spezielle Anwendungen zu langsam.

Zum Lösen diese Problems umfasst die erfindungsgemäße Vorrichtung (1) zumindest zwei Auflageflächen (3a, 3b) zum Aufnehmen von Stückgütern (2),eine Fördereinrichtung (40) zum Befüllen der Auflageflächen (3a, 3b) mit Stückgütern (2), wobei die Fördereinrichtung (40) den Auflageflächen (3a, 3b) zugeordnete Übergabeflächen (41a, 41b) aufweist, wobei die Fördereinrichtung (40) derart ausgebildet ist, dass die Auflageflächen (3a, 3b) getrennt voneinander mit Stückgütern (2) befüllt werden können, eine mit der Fördereinrichtung (40) gekoppelten Steuereinrichtung (6), eine mit der Steuereinrichtung (6) gekoppelten Erfassungseinrichtung (50) zum Erfassen von Position, Lage und Packungsdaten der Stückgüter (2), und eine mit der Steuereinrichtung (6) gekoppelten Handhabungseinrichtung (60) zum Ergreifen von Stückgütern (2) von den Auflageflächen (3a, 3b) und Ablegen der Stückgüter (2) auf einer Transporteinrichtung (8).

## Beschreibung

Die vorliegende Erfindung betrifft eine Vorrichtung zum Vereinzeln von in einem automatisierten Lager einzulagernden Stückgütern, und insbesondere eine Vorrichtung zum Vereinzeln von Arzneimittelpackungen. Die Erfindung betrifft ferner ein Verfahren zum Vereinzeln von Stückgütern.

Eine Vorrichtung zum Vereinzeln ist beispielsweise aus der DE 10 2004 012 133 A1 bekannt. Die Vorrichtung gemäß der vorgenannten Druckschrift wird insbesondere verwendet, um eine größere Anzahl quaderförmiger Stückgüter verschiedenster Abmessungen, insbesondere von Arzneimittelpackungen, die sich zunächst in einem Aufnahmebunker befinden, derart vereinzelt zur Verfügung zu stellen, dass diese nach Erfassen ihrer Abmessungen und nach Identifikation in ein automatisiertes Lager eingelagert werden können. Bei der bekannten Fördereinrichtung fördert beispielsweise ein Stufenförderer oder ein Förderband die Stückgüter nacheinander aus dem Bunker schräg nach oben, so dass die Stückgüter über eine Oberkante des Stufenförderers oder des Förderbandes treten und dann auf eine Auflagefläche fallen. Die Auflagefläche wird von einer Oberseite einer Platte aus einem durchsichtigen oder durchscheinenden Material gebildet. Eine unter der Platte angeordnete Kamera erzeugt eine Aufnahme, wobei die Kamera so fokussiert ist, dass sie die mit den quaderförmigen Stückgütern belegte Oberseite von unten aufnimmt. Aus den Aufnahmen werden sowohl identifizierende Informationen der aufliegenden Stückgüter als auch deren Lage und Position ermittelt. Unter Verwendung der so ermittelten Daten wird ein von oben auf die Stückgüter zugreifender Sauggreifer angesteuert, der einzelne Packungen aufnimmt und dem automatisierten Lager zuführt.

Mit der bekannten Vorrichtung können etwa 150 Packungen/Stunde vereinzelt werden. Sollen mit der Vorrichtung Arzneimittelpackungen vereinzelt werden, so reicht die Vereinzelungskapazität der vorgenannten Vorrichtung für übliche Apotheken aus. Wird das automatisierte Lager aber beispielsweise in Arzneimittel-Verteilzentren oder Krankenhaus-Apotheken betrieben, reicht die Vereinzelungskapazität der bekannten Vorrichtung nicht aus.

Es ist daher Aufgabe der vorliegenden Erfindung, eine Vorrichtung zum Vereinzeln von in einem automatisierten Lager einzulagernden Stückgütern mit einer erhöhten Vereinzelungskapazität sowie ein Verfahren zum Betreiben dieser Vorrichtung bereitzustellen.

Die Aufgabe wird erfindungsgemäß zum einen durch eine Vorrichtung zum Vereinzeln von in einem automatisierten Lager einzulagernden Stückgütern nach Anspruch 1 gelöst. Die erfindungsgemäße Vorrichtung umfasst zumindest zwei Auflageflächen zum Aufnehmen von Stückgütern sowie eine Fördereinrichtung zum Befüllen der Auflagenflächen mit Stückgütern, wobei die Fördereinrichtung den Auflageflächen zugeordnete Übergabeflächen aufweist, über welche Stückgüter an die Auflageflächen übergeben werden, wobei die Fördereinrichtung derart ausgebildet ist, dass die Auflageflächen getrennt voneinander mit Stückgütern befüllt werden können, d. h. dass mit der Fördereinrichtung zu einem Zeitpunkt beispielsweise lediglich eine von zwei Auflageflächen mit Stückgütern befüllt wird. In Abhängigkeit von der genauen Betriebsweise der Vorrichtung werden die Auflageflächen mit vorzugsweise lediglich einem Stückgut oder mit einer Mehrzahl von Stückgütern befüllt. Wie genau die Vorrichtung im Hinblick auf die Befüllung der Auflageflächen betrieben wird ist im Rahmen der vorliegenden Erfindung aber unwesentlich.

Die Fördereinrichtung ist mit einer Steuereinrichtung gekoppelt, wobei die Steuereinrichtung die Fördereinrichtung zum gezielten Befüllen der Auflageflächen ansteuert, d. h. die Steuereinrichtung steuert, wann welche Auflagefläche mit Stückgütern befüllt wird.

Mit der Steuereinrichtung ist eine Erfassungseinrichtung zum Erfassen von Position, Lage und Packungsdaten (und ggf. den Abmessungen) der Stückgüter gekoppelt. Die Erfassungseinrichtung kann eine Mehrzahl von Erfassungsmitteln umfassen und die vorgenannten Daten auf verschiedenen Wegen erfassen, die dem Fachmann hinlänglich bekannt sind. Beispielsweise kann die Erfassungseinrichtung durch eine oder mehrere Kameras gebildet sein, die mit einer entsprechenden Bildverarbeitungssoftware zum Erlangen der vorgenannten Informationen zusammen arbeiten.

Die erfindungsgemäße Vorrichtung umfasst ferner eine mit der Steuereinrichtung gekoppelte Handhabungseinrichtung zum Ergreifen von Stückgütern von den Auflageflächen und Ablegen der Stückgüter auf einer Transporteinrichtung. Die Transporteinrichtung zum Aufnehmen und Weiterleiten der Stückgüter zu dem oder in das automatisierte(n) Lager ist selber nicht notwendigerweise ein Teil der Vorrichtung, wirkt aber mit dieser zusammen und kann von der Vorrichtung selber oder dem Lager bereitgestellt werden. Die Transporteinrichtung selber kann eine "aktive" Transporteinrichtung sein, wie beispielsweise ein Förderband, oder eine "passive" Transporteinrichtung wie eine Rutsche.

Die erfindungsgemäße Vorrichtung stellt mit den zumindest zwei Auflageflächen, die getrennt voneinander mit Stückgütern befüllt werden können, und von denen unabhängig voneinander Stückgüter entnommen, erfasst und der Transporteinrichtung zugeführt werden können, zwei parallele "Vereinzelungspfade" zur Verfügung. So ist es beispielsweis möglich, dass (bei einer Vorrichtung mit zwei Auflageflächen) der ersten Auflagefläche Stückgüter zugeführt werden und zur gleichen Zeit bereits auf der zweiten Auflagefläche befindliche Stückgüter erfasst und vereinzelt der Transporteinrichtung zugeführt werden. Sobald sämtliche Stückgüter der zweiten Auflagefläche bearbeitet wurden, d. h. erfasst und der Transporteinrichtung übergeben wurden, kann die Vorrichtung sofort mit der Vereinzelung von inzwischen auf die erste Ablagefläche bewegten Stückgütern beginnen, es muss nicht darauf gewartet werden, dass die erste Auflage mit Stückgütern befüllt ist. Auf diese Weise kann die Geschwindigkeit des Gesamtvereinzelungsprozesses erheblich erhöht werden, es können also mehr Stückgüter pro Stunde vereinzelt werden.

Die Auflageflächen der erfindungsgemäßen Vorrichtung werden über die Fördereinrichtung mit Stückgütern befüllt. In Kenntnis der Funktionsweise der Fördereinrichtung sowie der Auflageflächen, die beispielsweise von einem Förderband oder einer kippbaren Fläche bereitgestellt werden können, kann das Befüllen der Auflageflächen mit Stückgütern zeitabhängig gesteuert werden, d. h. dass für einen Zeitraum t1 Stückgüter auf eine Auflagefläche bewegt werden und dann davon ausgegangen wird, dass diese ausreichend befüllt ist. Bei dieser zeitabhängigen Befüllung der Auflageflächen mit Stückgütern ist jedoch keine optimale Befüllung der Auflageflächen gewährleistet. Bei einer bevorzugten Ausführungsform der erfindungsgemäßen Vorrichtung ist es daher vorgesehen, dass die Vorrichtung eine mit der Steuereinrichtung gekoppelte Sensoreinrichtung zum Erfassen des Füllgrades der Auflageflächen aufweist. Diese Sensoreinrichtung stellt sicher, dass das Befüllen der Auflagefläche erst dann eingestellt wird, wenn ein optimaler Füllgrad erreicht ist, wobei der optimale Füllgrad von Details der Vorrichtung selber abhängig ist, beispielsweise von der Anordnung der Auflagenflächen und der Ausgestaltung der Handhabungseinrichtung.

In Abhängigkeit davon, wie genau die Vorrichtung betrieben wird, kann es aber auch vorgesehen sein, dass sofort nach dem Bewegen nur lediglich eines Stückguts auf eine Auflagefläche die weitere Befüllung dieser Auflagefläche eingestellt wird und eine andere Auflagefläche befüllt wird.

Bei der Sensoreinrichtung kann es sich beispielsweise um eine Lichtschranke oder einen Annäherungssensor handeln. Als Sensoreinrichtung kann aber auch ein optischer Sensor verwendet werden, der die Bewegung eines Stückgutes auf die Auflagefläche oder die Belegung der Auflagefläche ermittelt.

Mit der Erfassungseinrichtung wird die Lage und regelmäßig zumindest grob die Abmessung der Stückgüter auf der Auflagefläche ermittelt. Basierend auf den ermittelten Daten zur Lage und Abmessung eines Stückgutes wird die Handhabungseinrichtung angesteuert, das Stückgut von der Auflagefläche zu nehmen. Dazu kann die Handhabungseinrichtung beispielsweise einen Backengreifer oder einen Sauggreifer aufweisen. Vorzugsweise umfasst die Handhabungseinrichtung mehrere verschiedenen Greifmittel, die in Abhängigkeit von dem zu ergreifenden Stückgut aktiviert werden.

Bei der Ermittlung der Lage und der Abmessung des Stückgutes auf der Auflagefläche ist es regelmäßig nicht möglich, das Stückgut als solches zu identifizieren, da regelmäßig der Identifizierer des Stückgutes (beispielsweise ein Barcode) nicht erfassbar ist. Nach dem Aufnehmen des Stückgutes von der Auflagefläche wird dieses, sofern erforderlich, der Erfassungseinrichtung zugeführt, die Daten von dem Stückgut liest. Bei diesen Daten handelt es sich um den Identifizierer des Stückgutes und ggf. die Abmessungen des Stückgutes. Dazu kann das Stückgut von der Handhabungseinrichtung in vorgegebenen Bewegungsabläufen zu bzw. vor der Erfassungseinrichtung bewegt werden, wobei die Bewegungsabläufe davon abhängig sind, wann sämtliche notwendigen Daten ermittelt sind. Sofern aufgrund des Identifizierers auf die Abmessungen geschlossen werden kann (beispielsweise anhand einer Datenbank der Steuereinrichtung der Vorrichtung oder des Lagers) ist das Erfassen der Abmessungen natürlich nicht mehr erforderlich.

Bei der Ermittlung der weiteren Daten des ergriffenen Stückgutes mit der Erfassungseinrichtung kann diese nicht dazu verwendet werden, die Lage, Position und Abmessung eines weiteren zu ergreifenden Stückgutes auf der Ablagefläche zu bestimmen, wenn die Erfassungseinrichtung lediglich ein Erfassungsmittel umfasst. Bei einer bevorzugten Ausführungsform der erfindungsgemäßen Vorrichtung ist es daher vorgesehen, dass die Erfassungseinrichtung ein Objekt-Erfassungsmittel und ein Daten-Erfassungsmittel aufweist. Das Objekt-Erfassungsmittel ist für die Bestimmung der Lage, Position und ggf. Abmessung eines Stückgutes verantwortlich, wobei die von dem Objekt-Erfassungsmittel bereitgestellten Daten zum Ergreifen des Stückgutes mit der Handhabungseinrichtung verwendet werden. Das Daten-Erfassungsmittel wird dazu verwendet, die weiteren Daten, wie den Identifizierer, und ggf. die Abmessung, des Stückgutes, zu ermitteln.

Erfindungsgemäß ist es vorgesehen, dass die Vorrichtung zumindest zwei Auflageflächen umfasst, welche parallel betrieben werden. Den Auflageflächen kann ein Objekt-Erfassungsmittel zugeordnet sein, das derart angeordnet ist, dass es die Lage, Position und ggf. Abmessung eines Stückgutes auf jeder Auflagefläche ermitteln kann. Dazu kann das Objekt-Erfassungsmittel beispielsweise zwischen den einzelnen Auflageflächen an einer Führung bewegt werden. Bei einer bevorzugten Ausführungsform ist es jedoch vorgesehen, dass jeder Auflagefläche ein Objekt-Erfassungsmittel zugeordnet ist. Bei einer derartigen Ausgestaltung ist die Anordnung der Objekt-Erfassungsmittel konstruktiv einfacher möglich. Ferner ist es bei einer derartigen Ausgestaltung möglich, dass mit dem Objekt-Erfassungsmittel Lage, Position und Abmessung verschiedener Stückgüter auf einer Auflagefläche ermittelt werden, welche gerade befüllt wurde, wobei während dieses Vorgangs noch Stückgüter von einer anderen Auflagefläche entfernt werden, wozu die der anderen Auflagefläche zugeordnete Objekt-Erfassungsmittel notwendig ist.

Um die Erkennung der Stückgüter auf den Auflageflächen zu vereinfachen, ist es von Vorteil, dass die Stückgüter lediglich nebeneinander und nicht übereinander auf der Auflagefläche liegen. Um eine "Vorvereinzelung" zu erreichen, ist es bei einer bevorzugten Ausführungsform der Vorrichtung vorgesehen, dass die Fördereinrichtung eine der Anzahl der Auflageflächen entsprechende Anzahl von Fördermitteln aufweist, wobei bei jedem Fördermittel eine Übergabefläche angeordnet ist und die Fördermittel derart ausgebildet sind, dass die Auflageflächen getrennt voneinander mit Stückgütern befüllt werden können. Bei den Fördermitteln kann es sich beispielsweise um getrennt voneinander steuerbare Förderbänder oder Stufenförderer handeln.

Den Fördermitteln kann jeweils ein Haltemittel zugeordnet sein. Dies ist dann von Vorteil, wenn die Fördermittel nicht getrennt voneinander steuerbar sind. Wenn auf eine Auflagefläche keine weiteren Stückgüter bewegt werden sollen, wird das Haltemittel entsprechend in den Förderweg zu der nicht mehr zu befüllenden Auflagefläche bewegt, so dass über das Fördermittel Stückgüter lediglich auf andere Auflageflächen bewegt werden.

Alternativ zu der oben genannten Ausführungsform ist es vorgesehen, dass die Fördereinrichtung zumindest ein Fördermittel mit einer Mehrzahl von Übergabeflächen und einen Stückgutstromteiler aufweist, der die Übergabeflächen getrennt voneinander sperren kann, so dass die Auflageflächen getrennt voneinander mit Stückgütern befüllt werden können.

Die Fördermittel können beispielsweise über geeignete Vorrichtungen chargenweise mit einer bestimmten Anzahl von Stückgütern befüllt werden, welche sich auf den Fördermitteln verteilen und dann den Auflageflächen zugeführt werden. Bei einer bevorzugten Ausführungsform ist es vorgesehen, dass die Vorrichtung einen den Fördermitteln vorgelagerten Stückgutzuführer aufweist, über welchen Stückgüter den Fördermitteln zugeführt werden. Über diesen Stückgutzuführer können die Stückgüter kontrolliert denjenigen Fördermitteln zugeführt werden, welche eine ausreichende Aufnahmekapazität aufweisen. Der Stückgutzuführer kann ferner eine große Anzahl von Stückgütern speichern, so dass die Vorrichtung über einen längeren Zeitraum ohne eine erneute Zuführung von neuen Stückgütern betrieben werden kann.

Hinsichtlich der Anordnung der Transporteinrichtung in Bezug auf die Auflageflächen, ist es bei einer bevorzugten Ausführungsform vorgesehen, dass Auflageflächen parallel und beabstandet voneinander angeordnet sind. Dies ermöglicht einen konstruktiv besonders einfachen Aufbau der Vorrichtung. Die Handhabungseinrichtung kann dann mittig zwischen den Auflageflächen angeordnet sein, so dass lediglich kurze Wege von den Auflageflächen zu der Transporteinrichtung zurückzulegen sind. Umfasst die Vorrichtung mehr als zwei Auflageflächen, können zwei Transporteinrichtungen verwendet werden.

Die Auflageflächen können unterschiedlich gestaltet sein. Bei einer Ausführungsform wird eine Auflagefläche von einer neigbaren Auflageplatte bereitgestellt, die mit einer Stellvorrichtung gekoppelt sein kann. Alternativ kann die Auflagefläche von einem Bandförderer bereitgestellt werden. Es sind weitere Ausgestaltungen möglich, wobei stets sicherzustellen ist, dass die Stückgütern derart auf der oder auf die Auflagefläche bewegbar sind, dass sie im Aktionsradius der Handhabungseinrichtung sind.

Die oben genannte Aufgabe wird ferner gelöst durch ein Verfahren gemäß Patentanspruch 12. Erfindungsgemäß werden der Fördereinrichtung zunächst Stückgüter bereitgestellt, beispielsweise auf einem Stückgutzuführer, auf welchem eine größere Menge Stückgüter zwischengelagert werden können. Alternativ werden die Stückgüter über einen Stückgutbunker dem Stückgutzuführer oder direkt den Fördermitteln bereitgestellt.

Über einen ersten Förderweg werden Stückgüter von der Fördereinrichtung auf eine erste Auflagefläche bewegt und die Position und Lage der Stückgüter auf der ersten Ablage bestimmt, Stückgüter mit der Handhabungseinrichtung von der ersten Ablagefläche ergriffen und der Erfassungseinrichtung zugeführt bzw. an dieser vorbeigeführt (Verfahrensschritt c1), welche Daten von den Stückgütern liest, und Stückgüter von der Handhabungseinrichtung auf der Transporteinrichtung abgelegt.

Das Bewegen der Stückgüter auf die Auflagefläche kann derart vorgenommen werden, dass stets lediglich ein Stückgut auf die Auflagefläche bewegt wird und dieses dann weiter bearbeitet wird (Lage, Position bestimmen, Stückgut aufnehmen, Daten lesen, Stückgut auf der Transporteinrichtung ablegen). Alternativ können so lange Stückgüter auf die Auflagefläche bewegt werden, bis diese "voll" ist, und erst dann die weitere Bearbeitung der Stückgüter erfolgen.

Die Bestimmung der Position und der Lage der Stückgüter erfolgt mit Hilfe der Erfassungseinrichtung, wie das weiter oben bereits unter Bezugnahme auf die Vorrichtung beschrieben wurde. Wenn die Lage und die Position eines Stückgutes ermittelt ist, wird dieses mit der Handhabungseinrichtung ergriffen und der Erfassungseinrichtung zugeführt, welche Daten von den Stückgütern liest.

Wenn bei den Verfahrensschritt von "Stückgütern" die Rede ist, ist damit nicht gemeint, dass mehrere Stückgüter gleichzeitig beispielsweise von der Handhabungseinrichtung ergriffen werden, sondern vielmehr, dass einzelne Stückgüter nacheinander von der Handhabungseinrichtung ergriffen und der Erfassungseinrichtung zugeführt werden. Entsprechendes gilt für andere (aber nicht alle) Verfahrensschritte.

Erfindungsgemäß werden über einen zweiten Förderweg Stückgüter von der Fördereinrichtung auf eine zweite Auflagefläche bewegt, und es wird die Position und Lage der Stückgüter auf der zweiten Ablagefläche bestimmt. Die Stückgüter werden mit der Handhabungseinrichtung von der zweiten Ablagefläche ergriffen und der Erfassungseinrichtung zugeführt bzw. an dieser vorbeigeführt (Verfahrensschritt c2), welche Daten von den Stückgütern liest. Die Stückgüter werden dann von der Handhabungseinrichtung auf der Transporteinrichtung abgelegt.

Erfindungsgemäß sind die einzelnen Schritte der beiden Förderwege zeitlich derart aufeinander abgestimmt, dass die Schritte c1) und c2) nacheinander bzw. aufeinander abgestimmt ausgeführt werden, d. h. dass sobald gemäß Verfahrensschritt c1) sämtliche Stückgüter auf der ersten Auflagefläche mit der Handhabungseinrichtung ergriffen, der Erfassungseinrichtung zugeführt und von der Handhabungseinrichtung auf der Transporteinrichtung abgelegt wurden, dann gemäß c2) Stückgüter mit der Handhabungseinrichtung von der zweiten Ablagefläche ergriffen, der Erfassungseinrichtung zugeführt und von der Handhabungseinrichtung auf der Transporteinrichtung abgelegt werden. Gleichzeitig wird die erste nun leere Auflagefläche mit Stückgütern befüllt.

Eine "Bearbeitung" einer beliebigen Auflagefläche wird also initiiert, sobald die Bearbeitung einer anderen Auflagefläche beendet ist, unabhängig davon, wie viele Stückgüter auf einer Auflagefläche abgelegt waren. Da die Bearbeitung einer Auflagefläche direkt im Anschluss an die Bearbeitung einer anderen Auflagefläche erfolgt, also nicht gewartet werden muss, bis die üblicherweise vorhandene eine Auflagefläche wieder neu mit Stückgütern befüllt ist, können deutlich mehr Stückgüter pro Zeitintervall vereinzelt werden.

Bei einer bevorzugten Ausführungsform des erfindungsgemäßen Verfahrens werden die Position und die Lage der Stückgüter auf den Auflageflächen von separaten Objekt-Erfassungseinrichtungen erfasst. Bei einer weiteren bevorzugten Ausführungsform werden die Daten von den Stückgütern mit einer Daten-Erfassungseinrichtung gelesen.

Im Nachfolgenden werden verschiedene Ausführungsformen der erfindungsgemäßen Vorrichtung sowie das erfindungsgemäße Verfahren unter Bezugnahme auf die beigefügte Zeichnung beschrieben, in welcher
Figur 1 eine schematische Draufsicht einer ersten Ausführungsform der erfindungsgemäßen Vorrichtung zeigt,
Figur 2 eine schematische Draufsicht einer zweiten Ausführungsform der erfindungsgemäßen Vorrichtung zeigt,
Figur 3 eine schematische Draufsicht einer dritten Ausführungsform der erfindungsgemäßen Vorrichtung zeigt,
Figur 4 eine schematische Draufsicht einer vierten Ausführungsform der erfindungsgemäßen Vorrichtung zeigt, und
Figur 5 eine schematische Seitenansicht einer fünften Ausführungsform der erfindungsgemäßen Vorrichtung zeigt.

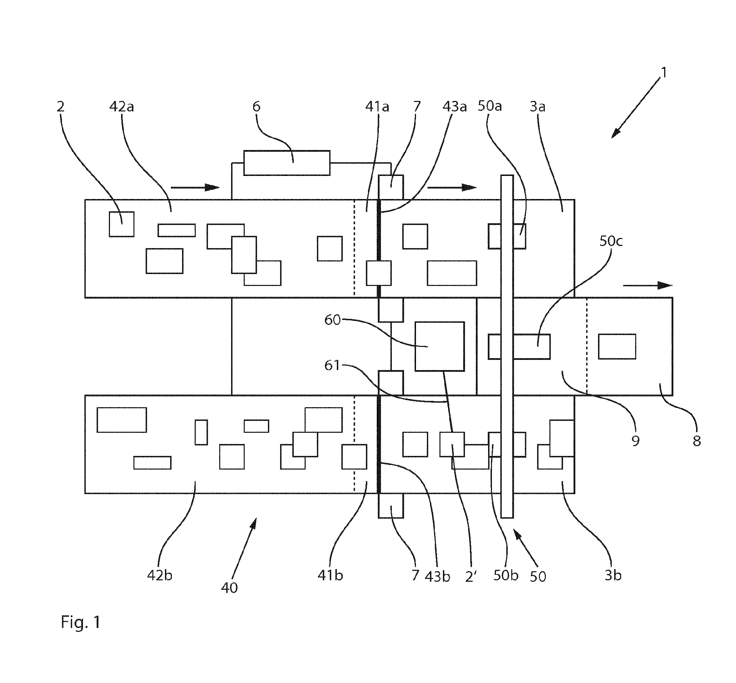

Figur 1 zeigt eine schematische Draufsicht einer ersten Ausführungsform der erfindungsgemäßen Vorrichtung 1. Die Vorrichtung umfasst zwei parallele Auflageflächen 3a, 3b, zwischen denen eine (nicht zur Vorrichtung gehörende) Transportrichtung 8 zum Aufnehmen und Weiterleiten von Stückgütern 2 angeordnet ist. Zwischen den Auflageflächen 3a, 3b ist ferner eine Handhabungseinrichtung 60 zum Ergreifen von Stückgütern 2 von den Auflageflächen 3a, 3b und zum Ablegen der Stückgüter auf der Transporteinrichtung 8 angeordnet. Bei der gezeigten Ausführungsform ist angedeutet, dass die Handhabungseinrichtung 60 über ein Greifmittel 61 ein Stückgut 2' ergriffen hat. Zum Ergreifen von Stückgütern kann die Handhabungseinrichtung 60 beispielsweise einen Sauggreifer oder einen Backengreifer aufweisen.

Über den Auflageflächen 3a, 3b sowie der Transporteinrichtung 8 ist eine Erfassungseinrichtung 50 mit zwei Objekt-Erfassungsmitteln 50a, 50b, die den Auflageflächen 3a, 3b zugeordnet sind, und einem Daten-Erfassungsmittel 50c angeordnet.

Sobald ein Stückgut von der Handhabungseinrichtung ergriffen wurde, wird es von dieser zu dem Daten-Erfassungsmittel 50c (bzw. an diesem vorbei) bewegt, und mit dem Daten-Erfassungsmittel wird ein Identifizierer eines Stückgutes gelesen. Bei dem Identifizierer kann es sich beispielsweise um einen Barcode oder einen RFID-Tag handeln, wobei das Daten-Erfassungsmittel 50c an die Art der verwendeten Identifizierer angepasst ist. Das Daten-Erfassungsmittel 50c kann auch mehrere Bauteile zum Lesen von Daten umfassen, wenn zu erwarten ist, dass Stückgüter mit unterschiedlichen Identifizierern vorkommen werden. Sofern erforderlich, werden ferner die Abmessungen des Stückgutes erfasst und dieses dann auf einem Aufnahmebereich 9 der Transporteinrichtung 8 abgelegt. Ein Erfassen der Abmessungen ist jedoch lediglich dann notwendig, wenn die Vorrichtung (oder das Lager) die Abmessungen nicht auf der Basis des Identifizierers kennt.

Den Auflageflächen 3a, 3b ist eine Fördereinrichtung 40 vorgelagert, die bei der gezeigten Ausführungsform zwei Fördermittel 42a, 42b aufweist. Die Fördermittel 42a, 42b weisen jeweils eine Übergabefläche 41a, 41b auf, welche an die Auflageflächen 3a, 3b angrenzen. Über diese Übergabeflächen 41a, 41b werden Stückgüter von den Fördermitteln 42a, 42b auf die Auflageflächen 3a, 3b bewegt. Jeder Übergabefläche 41a, 41b ist bei der gezeigten Ausführungsform ein Haltemittel 43a, 43b zugeordnet, über welches der Transportweg zwischen den Fördermitteln 42a, 42b und den Auflageflächen 3a, 3b gesperrt werden kann, was dann notwendig ist, wenn die Fördermittel 42a, 42b nicht getrennt voneinander gesteuert werden können, was bei der dargestellten Ausführungsform jedoch nicht der Fall ist.

Die Fördermittel 42a, 42b sind mit einer Steuereinrichtung 6 gekoppelt, die wiederum mit einem Sensor 7 gekoppelt ist, der den Füllgrad und/oder das Auftreffen eines Stückgutes auf einer der Auflageflächen 3a, 3b ermittelt. In Abhängigkeit von dem Füllgrad der Auflageflächen werden die Fördermittel über die Steuereinrichtung angetrieben, um bei noch nicht erreichter Füllkapazität weitere Stückgüter auf die Auflageflächen zu bewegen, sofern eine Befüllung der Auflagefläche mit mehreren Stückgütern gewünscht ist. Soll hingegen nur ein Stückgut auf eine Auflagefläche bewegt werden, wird über die Steuereinrichtung die weitere Zuführung verhindert, sobald festgestellt wird, dass ein Stückgut zugeführt wurde. Die Fördermittel 42a, 42b werden über (nicht dargestellte) weitere Fördermittel mit Stückgütern befüllt.

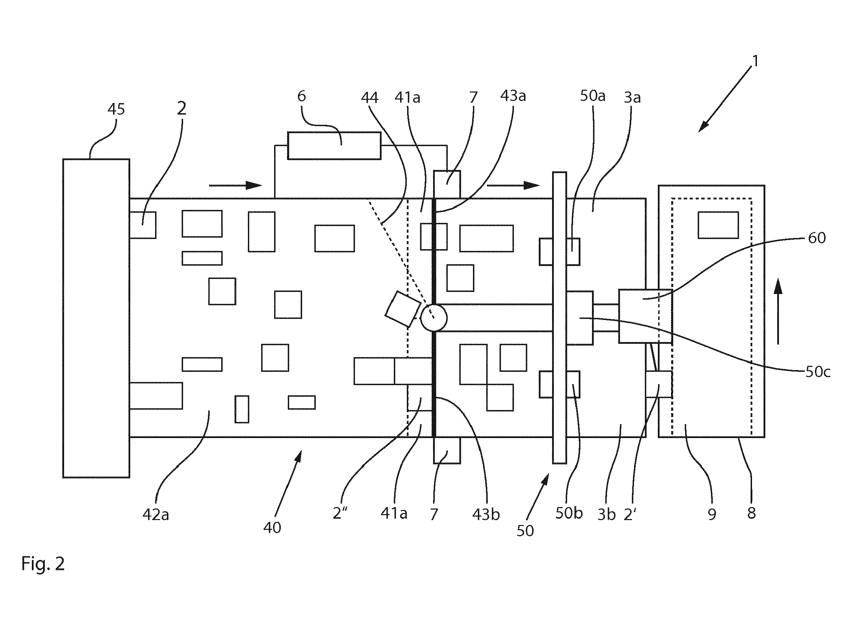

Figur 2 zeigt eine Draufsicht einer zweiten Ausführungsform der erfindungsgemäßen Vorrichtung 1. Auch bei dieser Ausführungsform umfasst die Vorrichtung zwei parallel angeordnete Auflageflächen 3a, 3b, über denen eine Erfassungseinrichtung 50 mit zwei Objekt-Erfassungsmitteln 50a, 50b und einem Daten-Erfassungsmittel 50c angeordnet ist. Bei dem rechten Ende der Auflageflächen 3a, 3b ist eine Transporteinrichtung 8 angeordnet, in deren Aufnahmebereich 9 Stückgüter von der Handhabungseinrichtung 60 abgesetzt werden, die zwischen den Auflageflächen 3a, 3b angeordnet ist. Auch bei dieser Ausführungsform kann die Handhabungseinrichtung 60 einen Backen- oder Sauggreifer aufweisen, mit welchem Stückgüter 2' ergriffen, dem Daten-Erfassungsmittel 50c zum Lesen der notwendigen Daten zugeführt und in dem Ablagebereich 9 der Transporteinrichtung 8 abgelegt werden können.

Die Fördereinrichtung 40 umfasst bei der gezeigten Ausführungsform lediglich ein Fördermittel 42a mit zwei Übergabeflächen 41a, 41b, über welche Stückgüter von dem Fördermittel 42a auf die Auflageflächen 3a, 3b bewegt werden können.

Jeder Übergabefläche 41a, 41b ist ein Haltemittel 43a, 43b zugeordnet, welches den Transportweg von dem Fördermittel 42a auf jeweils eine Auflagefläche unterbrechen kann. Bei der gezeigten Ausführungsform ist das "untere" Haltemittel 43b derart in den Förderweg herabbewegt, dass keine Stückgüter 2 von dem Fördermittel 42a auf die Auflagefläche 3b gelangen können (Stückgut 2" liegt an dem Haltemittel an und wird trotz Bewegung des Fördermittels nicht auf die Auflagefläche 3b bewegt). Das Haltemittel 43a ist nach oben aus dem Förderweg bewegt, so dass Stückgüter 2 von dem Fördermittel 42a auf die Auflagefläche 3a bewegt werden können.

Alternativ kann das Haltemittel auch als verschwenkbares Haltemittel 44 ausgebildet sein, das zwischen den Übergabeflächen hin und her geschwenkt wird, so dass stets ein Förderweg von dem Fördermittel auf eine Auflagefläche gesperrt ist. Der Schwenkweg des Haltemittels 44 ist dabei an die genauen baulichen Gegebenheiten anzupassen. Es kann beispielsweise notwendig sein, dass Haltemittel vor dem Verschwenken anzuheben.

Dem Fördermittel 42a ist ein Stückgutzuführer 45 zugeordnet, über welchen Stückgüter auf das Fördermittel 42a bewegt werden können. Wie auch bei der zuvor beschriebenen Ausführungsform umfasst die Vorrichtung eine Steuereinrichtung 6, die mit dem Fördermittel 42a und den Auflageflächen 3a, 3b gekoppelt ist. Die Steuereinrichtung ist ferner mit der Erfassungseinrichtung 50 und der Handhabungseinrichtung 60 zum Steuern des Erfassens, Ergreifens, Identifizierens und Ablegens von Stückgütern gekoppelt.

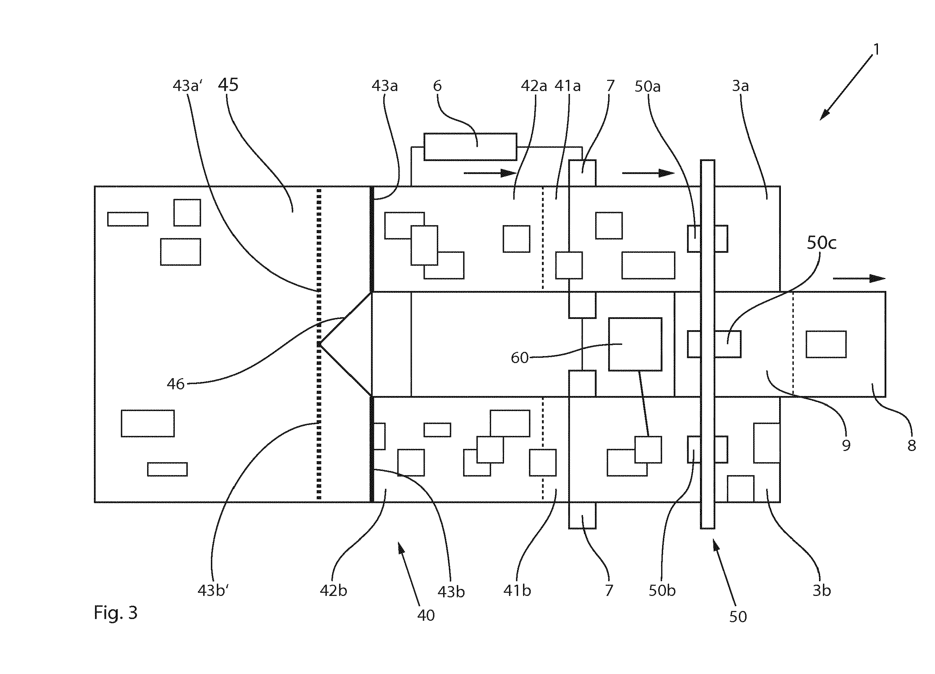

Figur 3 zeigt eine schematische Draufsicht einer dritten Ausführungsform der erfindungsgemäßen Vorrichtung 1, wobei diese im Wesentlichen der Ausführungsform gemäß Figur 1 entspricht, jedoch mit dem Unterschied, dass den Fördermitteln 42a, 42b ein Stückgutzuführer 45 zugeordnet ist, der bei dieser Ausführungsform als weiteres Förderband ausgebildet ist, von welchem Stückgüter auf die Fördermittel 42a, 42b bewegt werden. Bei dieser Ausführungsform sind zwischen dem Stückgutzuführer 45 und den Fördermitteln 42a, 42b Haltemittel 43a, 43b angeordnet, mit denen die Bewegung von Stückgütern auf die Fördermittel 42a, 42b eingeschränkt werden können. Bei dem Übergang von dem Stückgutzuführer zu den Fördermitteln 42a, 42b ist in dem mittleren Bereich des Stückgutzuführers 45 ein Stückgutstromteiler 46 angeordnet, der dafür sorgt, dass die Stückgüter im mittleren Bereich in Richtung auf die den Fördermitteln 42a, 42b zugeordneten Übergabebereiche 43a', 43b' des Stückgutförderers geleitet werden.

Bei dieser Ausführungsform sind den Übergabeflächen 41a, 41b keine Haltemittel zugeordnet, der Förderweg als solcher kann also nicht gesperrt werden. Dies macht er erforderlich, dass entweder die Fördermittel separat gesteuert werden können, so dass gezielt Stückgüter auf die Auflageflächen bewegt werden können, oder eine Sperrung des Förderwegs mit den nach dem Stückgutzuführer angeordneten Haltemitteln erfolgt. Dann dienen die Fördermittel quasi als Zwischenpuffer, von denen Stückgüter auf die Auflageflächen bewegt werden, sobald sämtliche Stückgüter von diesen entfernt wurden (was anhand der Objekt-Erfassungsmittel detektiert werden kann). Im Übrigen entspricht die Ausführungsform der in Figur 1 gezeigten Ausführungsform.

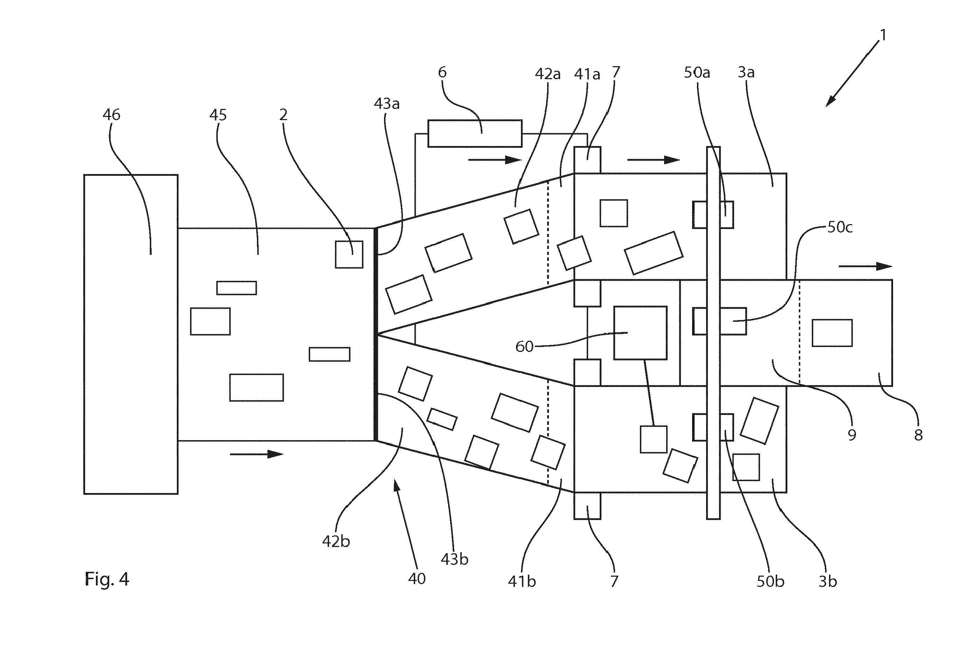

Figur 4 zeigt eine weitere Ausführungsform der erfindungsgemäßen Vorrichtung, wobei diese Ausführungsform weitgehend der Ausführungsform gemäß Figur 3 entspricht. Bei der hier gezeigten Ausführungsform umfasst die Vorrichtung wieder zwei Fördermittel 42a, 42b mit zwei Auflageflächen 3a, 3b zugeordneten Übergabeflächen 41a, 41b. Anders als bei der in Figur 3 gezeigten Ausführungsform sind die Fördermittel 42a, 42b jedoch nicht parallel, sondern gewinkelt zueinander angeordnet, so dass sie im linken Bereich aneinander stoßen.

Den Fördermitteln 42a, 42b ist ein Stückgutzuführer 45 vorgeschaltet, der bei der gezeigten Ausführungsform wieder als Förderband ausgebildet ist. Diesem Stückgutförderer ist noch ein Stückgutbunker 46 zugeordnet, in welchem ein größerer Vorrat an Stückgütern gelagert werden kann. Auch bei dieser Ausführungsform können die Fördermittel 42a, 42b als Förderbänder oder Stufenförderer ausgebildet sein, wobei bei der gezeigten Ausführungsform Förderbänder angedeutet sind. Der restliche Teil der in Figur 4 gezeigten Ausführungsform entspricht der bereits in den Figuren 1 und 3 dargestellten Ausführungsform.

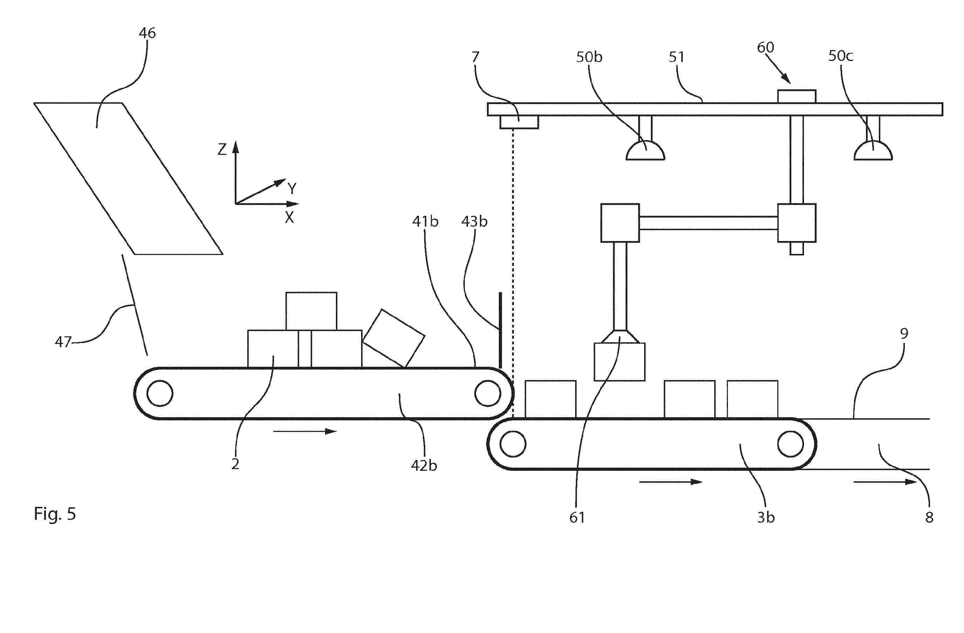

Figur 5 zeigt eine Seitenansicht einer fünften Ausführungsform der erfindungsgemäßen Vorrichtung. Auf der linken Seite der Figur 5 ist ein als Bandförderer ausgebildetes Fördermittel 42b zu erkennen, auf welchem eine Anzahl von Stückgütern 2 angeordnet ist. Über das Fördermittel 42b werden die Stückgüter einzeln oder in Gruppen auf die Auflagefläche 3b bewegt. Auf der Auflagefläche werden Lage und Position der Stückgüter von dem Objekt-Erfassungsmittel 50b erfasst, wobei das Objekt-Erfassungsmittel mit einer entsprechenden Software zusammenarbeitet, um die Lage und Position der einzelnen Stückgüter auf der Auflagefläche 3b zu ermitteln.

Sobald Lage und die Position eines Stückguts bestimmt wurde, wird dieses von einem Greifmittel 61 der Handhabungseinrichtung 60 ergriffen. Bei der gezeigten Ausführungsform ist das Greifmittel als Sauggreifer angedeutet, der am Ende der Handhabungseinrichtung angeordnet ist. Mit dem Sauggreifer bzw. der Handhabungseinrichtung 60 werden die Stückgüter der Daten-Erfassungsmittel 50c zugeführt bzw. an dieser vorbeigeführt, und es wird mit dem Daten-Erfassungsmittel der Identifizierer des Stückgutes gelesen. Sofern erforderlich, können mit dem Daten-Erfassungsmittel noch die Abmessungen des Stückgutes erfasst werden, sofern die Vorrichtung diese Informationen nicht basierend auf dem Identifizierer bereits vorliegen hat. Eine genaue Feststellung der Abmessungen kann auch dann unterbleiben, wenn eine Steuereinrichtung eines nachgeschalteten automatisierten Lagers anhand der übermitteln Daten des Identifizierers die Abmessungen anhand einer Datenbank ermitteln kann.

Sobald das Stückgut identifiziert ist, wird es von der Handhabungseinrichtung 60 auf einem Aufnahmebereich 9 der Transporteinrichtung 8 abgelegt. Mit Hilfe der Transporteinrichtung werden die Stückgüter in das automatisierte Lager bewegt, wo die Stückgüter mit einer entsprechenden Bedieneinrichtung an den ihnen zugeordneten Lagerorten abgelegt werden. Die genaue Bestimmung des Lagerortes wird von einer Steuereinrichtung des Lagers vorgenommen, da der Lagerort von der Belegung des Lagers abhängig ist.

Dem Fördermittel 42b ist ein Stückgutzuführer 46 zugeordnet, der bei der gezeigten Ausführungsform als eine Rutsche ausgebildet ist. Zur Vermeidung eines Hinabfallens von Stückgütern ist eine Wandung 47 bei dem Ende des Fördermittels 42b angeordnet.

Mit Hilfe des bei Erfassungseinrichtung 50 angeordneten Sensors 7 kann ermittelt werden, wenn ein Stückgut auf die Auflagefläche 3b bewegt wird. Der Sensor kann beispielsweise als einfache Lichtschranke ausgebildet sein. Alternativ kann der Sensor auch die Gesamtbelegung der Auflagefläche erfassen. Die Aufgaben des Sensors können bei entsprechender Ausgestaltung auch von dem Objekt-Erfassungsmittel 50b übernommen werden.

Bei den gezeigten Ausführungsformen wurden die Fördermittel stets als Förderbänder angedeutet. Eine entsprechende Ausgestaltung ist jedoch nicht erforderlich; die Fördermittel können beispielsweise auch als Stufenförderer oder vergleichbare, dem Fachmann bekannte Fördermittel ausgebildet sein. Auch die Auflageflächen wurden stets als Förderbänder dargestellt. Auch eine solche Ausgestaltung der Auflageflächen ist nicht unbedingt notwendig. Wie bereits angedeutet, können die Auflageflächen auch von beispielsweise verkippbaren Ebenen bereitgestellt werden. Zumindest dann, wenn mehrere Stückgüter auf die Auflageflächen bewegt werden sollen, ist es bevorzugt, die Auflageflächen so auszugestalten, dass Stückgüter von dem Übergabebereich fortbewegt werden können, um eine Aufstauung von Stückgütern zu vermeiden. Dies kann in einem einfachen Fall beispielsweise durch eine geneigte Oberfläche erreicht werden, an deren Ende ein Anschlag für aufliegende Stückgüter bereitgestellt ist.

## Patentansprüche

1. Vorrichtung (1) zum Vereinzeln von in einem automatisierten Lager einzulagernden Stückgütern (2), mit
zumindest zwei Auflageflächen (3a, 3b) zum Aufnehmen von Stückgütern (2),
einer Fördereinrichtung (40) zum Befüllen der Auflageflächen (3a, 3b) mit Stückgütern (2), wobei die Fördereinrichtung (40) den Auflageflächen (3a, 3b) zugeordnete Übergabeflächen (41a, 41b) aufweist, über welche Stückgüter (2) an die Auflageflächen (3a, 3b) übergeben werden, wobei die Fördereinrichtung (40) derart ausgebildet ist, dass die Auflageflächen (3a, 3b) getrennt voneinander mit Stückgütern (2) befüllt werden können,
einer mit der Fördereinrichtung (40) gekoppelten Steuereinrichtung (6), wobei die Steuereinrichtung (6) die Fördereinrichtung (40) zum gezielten Befüllen der Auflageflächen (3a, 3b) ansteuert,
einer mit der Steuereinrichtung (6) gekoppelten Erfassungseinrichtung (50) zum Erfassen von Position, Lage und Packungsdaten der Stückgüter (2), und
einer mit der Steuereinrichtung (6) gekoppelten Handhabungseinrichtung (60) zum Ergreifen von Stückgütern (2) von den Auflageflächen (3a, 3b) und Ablegen der Stückgüter (2) auf einer Transporteinrichtung (8).

2. Vorrichtung (1) nach Anspruch 1, **dadurch gekennzeichnet, dass** die Vorrichtung eine mit der Steuereinrichtung (6) gekoppelte Sensoreinrichtung (7) zum Erfassen des Füllgrades der Auflageflächen (3a, 3b) aufweist.

3. Vorrichtung (1) nach Anspruch 1 oder 2, **dadurch gekennzeichnet, dass** die Erfassungseinrichtung (50) zumindest ein Objekt-Erfassungsmittel (50a, 50b) und eine Daten-Erfassungseinrichtung (50c) aufweist.

4. Vorrichtung (1) nach Anspruch 3, **dadurch gekennzeichnet, dass** jeder Auflagefläche (3a, 3b) ein Objekt-Erfassungsmittel (50a, 50b) zugeordnet ist.

5. Vorrichtung (1) nach einem der Ansprüche 1 - 4, **dadurch gekennzeichnet, dass** die Fördereinrichtung (40) eine der Anzahl der Auflageflächen (3a, 3b) entsprechende Anzahl von Fördermitteln (42a, 42b) aufweist, wobei bei jedem Fördermittel (42a, 42b) eine Übergabefläche (41a, 41b) angeordnet ist und die Fördermittel derart ausgebildet sind, dass die Auflageflächen (3a, 3b) getrennt voneinander mit Stückgütern (2) befüllt werden können.

6. Vorrichtung (1) nach Anspruch 5, **dadurch gekennzeichnet, dass** den Fördermitteln (42a, 42b) jeweils ein Haltemittel (43a, 43b) zugeordnet ist.

7. Vorrichtung (1) nach einem der Ansprüche 1 - 4, **dadurch gekennzeichnet, dass** die Fördereinrichtung (40) zumindest ein Fördermittel (42a) mit einer Mehrzahl von Übergabeflächen (41a, 41b) und einen Stückgutstromteiler (43a, 43b, 44) aufweist, der die Übergabeflächen (41a, 41b) getrennt voneinander sperren kann, so dass die Auflageflächen (3a, 3b) getrennt voneinander mit Stückgütern (2) befüllt werden können.

8. Vorrichtung (1) nach Anspruch 5, **dadurch gekennzeichnet, dass** die Fördereinrichtung (40) einen den Fördermitteln (40a, 40b) vorgelagerten Stückgutzuführer (45) aufweist, über welchen Stückgüter (2) den Fördermitteln (42a, 42b) zugeführt werden.

9. Vorrichtung (1) nach einem der Ansprüche 1 - 5, **dadurch gekennzeichnet, dass** die Auflageflächen (3a, 3b) parallel und beabstandet voneinander angeordnet sind.

10. Vorrichtung (1) nach einem der Ansprüche 1 - 9, **dadurch gekennzeichnet, dass** eine Auflagefläche (3a, 3b) von einem Bandförderer bereitgestellt wird.

11. Vorrichtung (1) nach einem der Ansprüche 1 - 10, **dadurch gekennzeichnet, dass** eine Auflagefläche (3a, 3b) von einer geneigten Auflageplatte bereitgestellt wird, die mit einer Stellvorrichtung gekoppelt sein kann.

12. Verfahren zum Vereinzeln von Stückgütern mit einer Vorrichtung (1) gemäß einem der Ansprüche 1 - 11, wobei der Fördereinrichtung (40) Stückgüter bereitgestellt werden,
wobei über einen ersten Förderweg
b1) Stückgüter von der Fördereinrichtung (40) auf eine erste Auflagefläche bewegt werden und die Position und Lage der Stückgüter auf der ersten Ablagefläche bestimmt werden,
c1) Stückguter mit der Handhabungseinrichtung von der ersten Ablagefläche ergriffen und der Erfassungseinrichtung zugeführt werden, welche Daten von den Stückgütern liest,
d1) Stückgüter von der Handhabungseinrichtung auf der Transporteinrichtung abgelegt werden,
und wobei über einen zweiten Förderweg
b2) Stückgüter von der Fördereinrichtung (40) auf eine zweite Auflagefläche bewegt werden und die Position und Lage der Stückgüter auf der zweiten Ablagefläche bestimmt werden,
c2) Stückguter mit der Handhabungseinrichtung von der zweiten Ablagefläche ergriffen und der Erfassungseinrichtung zugeführt werden, welche Daten von den Stückgütern liest,
d2) Stückgüter von der Handhabungseinrichtung auf der Transporteinrichtung abgelegt werden,
und wobei die einzelnen Schritte der beiden Förderwege zeitlich derart aufeinander abgestimmt sind, dass die Schritte c1) und c2) nacheinander ausgeführt werden.

13. Verfahren nach Anspruch 12, **dadurch gekennzeichnet, dass** die Position und die Lage der Stückgüter auf den Auflageflächen von separaten Objekt-Erfassungsmitteln erfasst werden.

14. Verfahren nach Anspruch 12 oder 13, **dadurch gekennzeichnet, dass** die Daten von den Stückgütern mit einem Daten-Erfassungsmittel gelesen werden.
